# EUROPÄISCHE PATENTSCHRIFT

(11) **EP 0 995 288 B1**
(45) Veröffentlichungstag und Bekanntmachung des Hinweises auf die Patenterteilung: **20.02.2008**
(21) Anmeldenummer: 98944977.2
(22) Anmeldetag: 10.07.1998
(51) Int. Cl.: H04L 9/32

(54) **VERFAHREN UND VORRICHTUNG ZUR GEGENSEITIGEN AUTHENTISIERUNG VON KOMPONENTEN IN EINEM NETZ MIT DEM CHALLENGE-RESPONSE-VERFAHREN**
METHOD AND DEVICE FOR THE MUTUAL AUTHENTICATION OF COMPONENTS IN A NETWORK USING THE CHALLENGE-RESPONSE METHOD
PROCEDE ET DISPOSITIF D'AUTHENTIFICATION RECIPROQUE D'ELEMENTS CONSTITUTIFS DANS UN RESEAU PAR PROCEDE DE DEFI-REPONSE

(30) Priorität: 10.07.1997 DE 19729611; 15.07.1997 DE 19730301
(43) Veröffentlichungstag der Anmeldung: 26.04.2000
(73) Patentinhaber: T-Mobile Deutschland GmbH, 53227 Bonn (DE)
(72) Erfinder: PERNICE, Frieder +di, Gross-Zimmern (DE); MARINGER, Günter, D-53115 Bonn (DE); MOHRS, Walter, D-53123 Bonn (DE)
(74) Vertreter: Riebling, Peter
(86) Internationale Anmeldenummer: PCT/DE1998/001922
(87) Internationale Veröffentlichungsnummer: WO 1999/003285

(56) Entgegenhaltungen:
- EP-A- 0 447 380

## Beschreibung

Die Erfindung betrifft ein Verfahren und eine Vorrichtung zur gegenseitigen Authentisierung von Komponenten in einem Netz mit dem Challenge-Response-Verfahren nach dem Oberbegriff des Anspruches 1. Insbesondere betrifft die Erfindung die gegenseitige Authentisierung eines Endgeräts, bevorzugt einer Mobilstation gegenüber dem Netz und umgekehrt. Im folgenden wird der Begriff "Mobilstation" verwendet; dies ist nicht einschränkend zu verstehen. Hierunter sollen alle möglichen Endgeräte fallen, auch stationäre, wie z.B. einzelne Nutzer eines Computers in einem drahtgebundenen System.

Authentisieren dient zur Überprüfung der Echtheit der zu authentisierenden Komponente.

Stand der Technik ist das sogenannte Challenge-Response-Verfahren: Bei diesem wird von der authentisierenden Komponente (N = Netz) eine Zufallszahl (Challenge) an die zu authentisierende Komponente (M = Mobilstation) gesandt, die mit Hilfe eines Algorithmus (A) und eines geheimen, beiden Komponenten bekannten Schlüssels K in eine Antwort (Response) umgerechnet wird. Im Netz N wird mit gleichem Schlüssel K und dem gleichen Algorithmus A die erwartete Response errechnet; eine Übereinstimmung der von M zurückgesendeten mit der bei N errechneten Response beweist die Echtheit von M.

Eine gegenseitige Authentisierung wird nach Stand der Technik dadurch erreicht, daß der obige Ablauf mit umgekehrter Rollenverteilung stattfindet. Eine derartige bidirektionale Authentisierung ist z.B. in der EP-A-0 447 380 beschrieben.

Bei dem bekannten Challenge-Response-Verfahren gibt demnach das Festnetz eine Challenge an die Mobilstation M und die Mobilstation M antwortet mit einer Response, die aus einem Rechenverfahren errechnet wurde, das in der Mobilstation implementiert ist und zu der ein geheimer Schlüssel K gehört. Dieser Schlüssel K ist einmalig. D. h. nur diese Mobilstation kann so antworten, wie es von ihr erwartet wird, sofern sie "echt" = authentisiert ist. Eine andere Mobilstation (M) kann diesen Schlüssel nicht simulieren.

Nachteil des bisherigen Verfahrens ist, daß das gesamte Authentisierungsverfahren nur und ausschließlich in der AUC (Authentisierungszentrale), das heißt praktisch in der Rechenzentrale, verifiziert werden kann.

Aus Sicherheitsgründen hat es sich nämlich in Systemarchitekturen als vorteilhaft erwiesen, A und K an zentraler Stelle (im Authentication Center = AUC) zu verwalten, wobei der authentisierenden (die Echtheitsprüfung durchführenden) Stelle N zum Zwecke der Authentisierung nur Challenge/Response-Paare im voraus (ggf. mehrere auf Vorrat) übertragen werden.

Die vom AUC in das Netz (auf Anforderung des Netzes in Form eines sogenannten "Duplet Request") übergebenen Challenge/Response-Paare werden also in großem Umfang bereits schon "auf Vorrat" errechnet und wenn während des Authentisierungsvorgangs die Antwort (Response) von der Mobilstation M kommt, werden beide Anworten verglichen. Bei Übereinstimmung ist damit das Authentisierungsverfahren der Mobilstation M gegenüber dem Netz N erfolgreich beendet.

Bei den bekannten Verfahren des Standes der Technik ist demnach vorgesehen, daß sich die Mobilstationen gegenüber dem Netz authentisieren. Es besteht damit die Gefahr, daß von Unbefugten das Netz simuliert wird und daß damit die betreffende Mobilstation M an das simulierte Netz "angelockt" wird und hierbei der Mobilstation M vorgespiegelt wird, es handele sich hierbei um das "richtige" Netz N. Für diesen unerlaubten Fall würde sich die M gegenüber dem simulierten Netz N authentisieren und damit kann der unbefugte Betreiber des simulierten Netzes nichtöffentliche Daten aus dieser Mobilstation M abrufen.

Als Beispiel sei das GSM-Netz genannt, das bisher nur eine einseitige Authentisierung vornimmt (M authentisiert sich gegenüber N). Beim ferner bekannten TETRA-Standard, ist eine zweiseitige Authentisierung erlaubt.

Zur besseren Verdeutlichung der später verwendeten Begriffe "Challenge 1, Response 1 und Challenge 2, Resonse 2", wird nachfolgend das Verfahren erläutert:

Die Challenge 1 dient der Authentikation der Mobilstation M gegenüber dem Netz N. Sobald diese Authentikation erfolgreich abgeschlossen wurde, fordert die Mobilstation M eine umgekehrte Authentifizierung, in der Weise, daß jetzt geprüft wird, ob das derzeitige Netz N auch wirklich das befugte Netz ist und nicht ein unerlaubterweise simuliertes Netz. Es soll sich also das Netz N gegenüber der Mobilstation M authentisieren. Die Mobilstation M schickt hierbei eine Challenge 2 zum Netz, dieses leitet die Challenge 2 zum AUC weiter, wo daraus die Response 2 errechnet wird, die wiederum an das Netz N geschickt wird, welches Response 2 an die Mobilstation weiterleitet. Hat die Mobilstation die Übereinstimmung von der selbst berechneten Response 2 und der erhaltenen Response 2 festgestellt, ist damit die Authentifizierung erfolgreich beendet. Dieses Authentifizierungspaar wird als Challenge 2/Response 2 bezeichnet.

Bei gegenseitiger Authentisierung wirkt sich in solchen Systemarchitekturen nachteilig aus, daß die von M gesandte Challenge nicht in N, sondern nur im AUC in die Response umgerechnet werden kann, was unter Umständen zu erheblichen Zeitverzögerungen wegen des Datentransfers N-AUC-N und der online Rechenoperation im AUC führt.

Der Erfindung liegt die Aufgabe zugrunde, das bekannte Verfahren zur Authentifikation von Komponenten in einem Netz, insbesondere in einem GSM-Netz, so zu verbessern, daß dieses Verfahren wesentlich beschleunigt wird.

Zur Lösung der gestellten Aufgabe ist das Verfahren dadurch gekennzeichnet, daß die von der Mobilstation M zurückgesandte Response 1 gleichzeitig von dem Netz N als Challenge 2 verwendet wird, was den Vorteil hat, daß vom AUC gleichzeitig mit den o.g. Challenge/Response-Paaren auch die Response 2 (als Antwort auf Challenge 2) errechnet und übermittelt wird. Dadurch entfällt die Zeitverzögerung, die auftreten würde, wenn N sich Response 2 erst nach Eintreffen von Challenge 2 beim AUC besorgen müßte.

Damit ist vorgesehen, daß die Mobilstation zur Echtheitserkennung des Netzes N nicht mehr eine Challenge 2 intern erzeugt und an das Netz schickt, sondern daß durch Gleichsetzen der Response 1 mit der Challenge 2 schon gegenseitige Übereinstimmung in M und N über die erwartete Challenge 2 existiert. Das Netz kann somit schon eine Response 2 erzeugen und an die Mobilstation schicken, welche diese Response 2 mit dem bei sich errechneten Wert vergleicht und bei Übereinstimmung das Netz als "echt" anerkennt.

Wichtig hierbei ist also , daß man die von der Mobilstation an das Netz abgeschickte Response 1 gleichzeitig als Challenge 2 dieser Mobilstation benutzt, welche diese aber nicht mehr in das Netz schickt, um auf die Response 2 des Netzes wartet. Die Challenge 2 der Mobilstation kennt das Netz nämlich schon vorher, weil die Response 2 intern bereits schon berechnet wurde. Damit kann das Netz bereits auch schon die Response 2 errechnen.

Erfindungsgemäß laufen die wechselseitige Authentifikation von Mobilstation zum Netz und danachfolgend die Authentifikation von Netz zur Mobilstation nun nicht mehr mit relativ hohem Zeitbedarf zeitlich aufeinanderfolgend ab, sondern die beiden Echtheitsprüfungen werden nun zeitlich miteinander verzahnt.

Es wird damit eine vollständige Datenübertragung einer Prüfzahl (Challenge 2) vermieden, denn erfindungsgemäß kann die (Challenge 2 eingespart werden und muß nicht mehr übertragen werden. Die separate Übertragung der Response 2 vom Netz wird dadurch eingespart, als das Netz gleich bei Absendung von Challenge 1 auch bereits schon die Response 2 zur Mobilstation schickt. Begründet wird dies damit, daß das Netz schon vorher weiß, was die Challenge 2 der Mobilstation sein wird, also kann das Netz auch sofort die Response 2 zur Mobilstation schicken. In einer einzigen Datenübertragung überträgt das Netz also die Datenpaarung Challenge 1 / Response 2 zur Mobilstation.

Damit wird erreicht, daß die Mobilstation die Echtheit von N bereits erkannt hat, bevor sich M gegenüber N authentisiert hat.

Hierbei gibt es zwei verschiedene Ausführungen :

In einer ersten Ausführungsform übermittelt das Netz an die Mobilstation die Challenge 1. Die Mobilstation M antwortet mit Response 1. Nachdem dem Netz vom AUC vorher aber bereits eine Vielzahl von Dreier-Datenpaketen (Triplet= Challenge 1/Response 1 / Response 2) übermittelt wurden, kennt das Netz N auch die Response 1 der Mobilstation M im voraus. Mit Kenntnis von Response 1 ist ihm aber auch die Challenge 2 bekannt. Die Mobilstation sendet nun nicht mehr die Challenge 2 zum Netz, sondern das Netz antwortet auf die Response 1 von M mit der Response 2. Diese Kenntnis ist jedoch nur dem "echten" Netz zu eigen; ein simuliertes, unerlaubtes Netz hat diese Kenntnis nicht; damit hat sich das Netz N gegenüber der Mobilstation durch die Übertragung eines einzigen Datenpaktes (Challenge 1 / Response 2) authentisiert und erspart sich die Übertragung des zweiten Datenpaketes (Challenge 2).

Hierbei ist vorteilhaft, daß die Response 2 eine Funktion von Response 1 ist. Das heißt, bei Kenntnis des Funktionszusammenhangs kann aus der Response 1 = Challenge 2 die Response 2 berechnet werden. Nach dem Stand der Technik war die Response 2 eine Funktion von Challenge 2. Erfindungsgemäß muß Challenge 2 nicht mehr übertragen werden, da Challenge 2 = Response 1 eine Funktion von Challenge 1 ist.

Letztendlich gilt durch die Gleichsetzung von Response 1 und Challenge 2, daß Response 2 auch eine Funktion von Challenge 1 ist.

In der ersten Ausgestaltung werden demgemäß Challenge 1 und Response 2 zeitlich hintereinander folgend an die Mobilstation M geschickt.

In einer zweiten Ausgestaltung ist es vorgesehen, daß Challenge 1 und Response 2 als ein Datenpaket zusammen an die Mobilstation M geschickt werden.

Hierauf antwortet die Mobilstation mit Response 1 und jetzt vergleicht das Netz Response 1 mit dem erwarteten Wert von Response 1 und die Mobilstation vergleicht Response 2 mit dem intern errechneten Wert von Response 2.

In bekannten Systemen (z..B. im GSM-Netz) ist die Länge der Response (32 bit) kürzer als die Zufallszahl Challenge ( 128 bit). Um die Response gleichzeitig als Challenge zur Authentisierung von N gegenüber M mit dem gleichen Algorithmus A benutzen zu können, ist es notwendig, die Länge von Response 1 auf die von Algorithmus A erwartete Länge von 128 bit zu erhöhen.

Dies könnte durch vierfache Verkettung von Response 1 (4 x 32 bit = 128 bit) oder durch vorher definiertes (teilnehmerindividuelles oder teilnehmerunabhängiges) Auffüllen auf 128 bit erreicht werden.

Vorschläge für das teilnehmerindividuelle Auffüllen sind:
1 Hernahme des kompletten Rechenergebnisses von Response 1 , bevor es zur Übertragung zur Gegenstelle auf 32 bit verkürzt wurde
2 Auffüllen mit definierten Bits aus dem in M und AUC bekannten Kᵢ.

Der Vorteil beider Ausführungsformen gegenüber dem Stand der Technik liegt also darin, daß der Datenverkehr zwischen dem Netz und der Mobilstation einerseits und auch der Datenverkehr zwischen dem Netz und der AUC vereinfacht und damit beschleunigt wird. Nach dem Stand der Technik müssen vier Telegramme zwischen Netz und Mobilstation M hin und hergeschickt werden, nämlich Challenge 1, Response 1, Challenge 2 und Response 2.

Außerdem muß das Netz die Challenge 2 erst an das AUC übermitteln und dieses muß die Response 2 errechnen und an das Netz übergeben, was mit weiterem Zeitverlust verbunden ist.

Erfindungsgemäß wird eine zeitaufwendige Online-Abfrage vom Netz an die AUC vermieden. Dies erfolgt dadurch, daß bereits schon vor dem eigentliche Datenverkehr zur Authentifizierung zwischen Netz und Mobilstation die von der AUC hierfür benötigten Datenpakete abgerufen und beim Netz zur späteren Verwendung zwischengespeichert werden.

Derartige Datenpakte (Triplets) können schon in großem zeitlichen Vorlauf (z. B. Stunden oder Tage vorher) vom Netz vom AUC abgerufen werden. Allen beiden Ausführungen ist hierbei gemeinsam, daß man die Response 1 als Challenge 2 benutzt und damit auf die eigentliche Übermittlung von Challenge 2 verzichten kann.

Mehrere bevorzugte Ausführungsbeispiele werden nun anhand der Zeichnungen näher beschrieben. Hierbei gehen aus der Zeichnung und ihrer Beschreibung weitere Merkmale der Erfindung hervor. Es zeigern :
Fig. 1 : Schematisiert ein Authentifizierungsverfahren nach dem Stand der Technik
Fig. 2 : Eine erste Ausführungsform der Authentifizierung nach der Erfindung
Fig. 3 : Eine zweite Ausführungsform der Authentifizierung nach der Erfindung

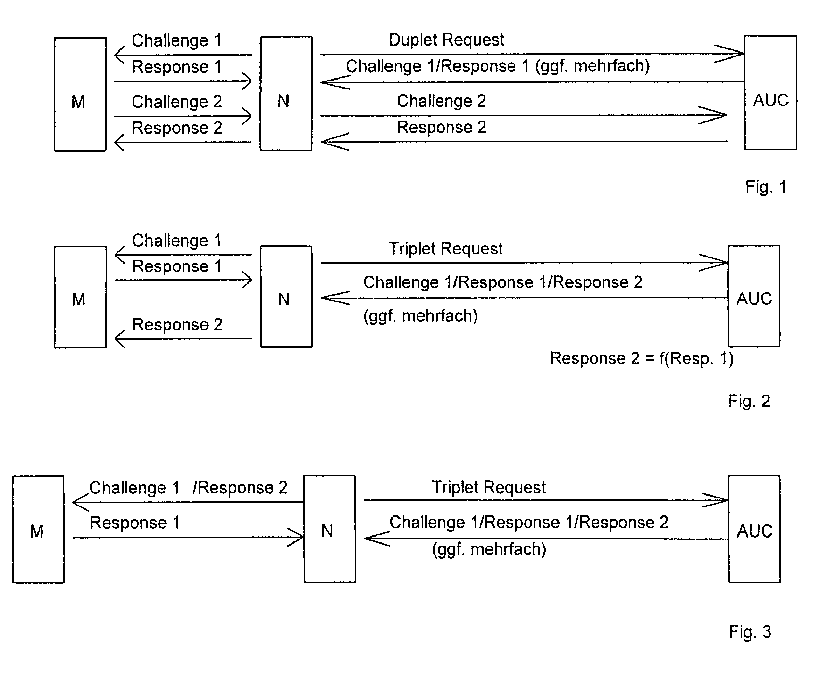

In der Ausführung nach Fig. 1 fordert zunächst das Netz N Datensätze als Zweier-Pakete (Duplet-Request) von der AUC an.

Diese Zweier-Pakete enthalten die Datensätze für Challenge 1/Response 1. Sobald sich nun eine Mobilstation M gegenüber dem Netz N authentifizieren soll, sendet N zunächst den Datensatz Challenge 1 an M, welche mit Response 1 antwortet. Falls N eine Übereinstimmung beider Datensätze feststellt, wurde damit die "Echtheit" von M gegenüber N erwiesen. Umgekehrt fordert nun M die Echtheitsprüfung von N dadurch, daß M an N eine Challenge 2 sendet, welche N an AUC weiterleitet, wo daraus die geforderte Response 2 berechnet wird, die AUC an N weitergibt, die dieses wiederum an M absendet. M vergleicht nun die intern berechnete und die von N erhaltene Response 2 und erkennt bei Übereinstimmung beider die Echtheit von N an.

Wie bereits schon eingangs darauf hingewiesen, wird durch diesen vielfältigen Datenaustausch der Verkehr zwischen M und N einerseits und N und AUC andererseits stark belastet und ist daher mit Zeitverzögerungen behaftet.

Hier greift das neue Verfahren in seiner ersten Ausführung gemäß Fig. 2 ein, wo vorgesehen ist, daß N von AUC sogenannte Dreier-Datensätze (Triplets) in Form von Challenge 1/Response 1/Response 2 fordert. Hierbei ist der Datensatz Response 2 eine definierte Funktion des Datensatzes Response 1 und durch einen Algorithmus berechenbar. Derartige Datensätze werden zeitlich längst vor der Abwicklung des Datenverkehrs von N mit M von AUC abgefordert und in Form von Vielfach-Datensätzen in N gespeichert. Hierdurch entfällt die Notwendigkeit des Online-Datenverkehrs zwischen N und AUC, wie es beim Stand der Technik nach Figur 1 notwendig gewesen war.

Zur Authentifizierung von M gegenüber N sendet N an M zunächst die Challenge 1, worauf M mit der Response 1 antwortet. Nachdem N bereits schon den Datensatz Challenge 2 kennt, der beim Stand der Technik von M an N gesendet wird, reicht es aus, wenn N zur Authentifizierung gegenüber M nur noch den Datensatz Response 2 an M sendet. M hat intern den Datensatz Response 2 errechnet und vergleicht diesen mit der von N gesendeten Response 2. Bei Übereinstimmung ist damit die "Echtheit" von N gegenüber M erwiesen.

In der zweiten Ausführungsform des Verfahrens nach Figur 3 ist in Abweichung des Verfahrens nach Figur 2 vorgesehen, daß N sofort und einmalig den Datensatz Challenge 1/Response 2 an M schickt. Sobald M den Datensatz Response 1 zurückschickt ist damit sowohl die Authentifizierung von M gegenüber N als auch umgekehrt von N gegenüber M gelungen.

## Patentansprüche

1. Verfahren zur gegenseitigen Authentisierung von Komponenten in einem Netz nach dem Challenge-Response-Verfahren, bei dem zur Authentifizierung eines Endgeräts (M), insbesondere einer Mobilstation, gegenüber dem Netz das Netz (N) von einem Authentisierungszentrum (AUC) aufgrund einer Anforderung mindestens ein Datenpaar bestehend aus einer ersten Zufallszahl (Challenge 1) und einer ersten Antwort (Response 1) anfordert und die erste Zufallszahl (Challenge 1) an das Endgerät (M) weiterleitet, welches aufgrund eines intern gespeicherten Schlüssels (Ki) hieraus ebenfalls die erste Antwort (Response 1) berechnet und an das Netz (N) sendet, wobei ferner eine Authentisierung des Netzes (N) gegenüber dem Endgerät (M) stattfindet, indem das Endgerät eine zweite Zufallszahl (Challenge 2) zum Netz sendet, die vom Netz mit einer im AUC berechneten zweiten Antwort (Response 2) beantwortet wird,
**dadurch gekennzeichnet,**
**daß** die vom Endgerät (M) an das Netz (N) gesendete erste Antwort (Response 1) gleichzeitig als zweite Zufallszahl (Challenge 2) verwendet wird, wobei vom Netz die zweite Antwort (Response 2) bereits zuvor zusammen mit der ersten Zufallszahl und der ersten Antwort im Rahmen eines Dreier-Datensatzes (Challenge 1/ Response 1/ Response 2) vom AUC angefordert wurde.

2. Verfahren nach Anspruch 1, **dadurch gekennzeichnet, daß** das Netz die von dem Endgerät (M) zurückgesandte erste Antwort (Response 1) als zweite Zufallszahl (Challenge 2) interpretiert.

3. Verfahren nach Anspruch 1 oder 2, **dadurch gekennzeichnet, daß** die Übertragung der ersten Zufallszahl (Challenge 1) und ersten Antwort (Response 2) von dem Netz (N) zu dem Endgerät (M) zeitlich hintereinander folgend erfolgt.

4. Verfahren nach Anspruch 1 oder 2, **dadurch gekennzeichnet, daß** die Übertragung des Datenpaares (Challenge 1/Response 2) von dem Netz (N) zu dem Endgerät (M) gleichzeitig in Form eines einzigen Datensatzes erfolgt.

5. Verfahren nach einem der Ansprüche 2, 3 oder 4, **dadurch gekennzeichnet, daß** das Netz Datensätze vom Authentifizierungszentrum (AUC) in Form von Dreier-Datensätzen (Challenge 1/Response 1/Response 2) anfordert.

6. Verfahren nach Anspruch 5, **dadurch gekennzeichnet, daß** zur Herabsetzung der Anforderungshäufigkeit mehrere Dreier-Datensätze vom AUC als Vorrat geliefert werden.

7. Verfahren nach Anspruch 4 oder 5, **dadurch gekennzeichnet, daß** zur Verwendung der ersten Antwort (Response 1) des Endgeräts (M) als zweite Zufallszahl (Challenge 2) zwecks Authentifikation des Netzes gegenüber dem Endgerät (M) die kürzere Länge der ersten Antwort (Response 1) auf die größere Länge der zweiten Zufallszahl (Challenge 2) aufgefüllt wird.

8. Verfahren nach Anspruch 7, **dadurch gekennzeichnet, daß** das Auffüllen teilnehmer-individuell erfolgt und daß die vollständige Länge der ersten Antwort (Response 1) vor der Übertragung auf die Gegenstelle verkürzt wird.

9. Verfahren nach Anspruch 8, **dadurch gekennzeichnet, daß** die erste Antwort (Response 1) mit definierten Bits aus dem geheimen Schlüssel (Ki) auf die Länge der zweiten Zufallszahl (Challenge 2) aufgefüllt wird.

10. Verfahren nach Anspruch 8, **dadurch gekennzeichnet, daß** die zweite Zufallszahl (Challenge) der originalen ersten Antwort (Response 1) vor ihrer Kürzung entspricht.

11. Verfahren nach einem der Ansprüche 1 - 10, **dadurch gekennzeichnet, daß** das Netz ein GSM-Netz ist.

12. Verfahren nach einem der Ansprüche 1 - 10, **dadurch gekennzeichnet, daß** das Netz ein drahtgebundenes Netz ist.

13. Verfahren nach Anspruch 12, **dadurch gekennzeichnet, daß** die einzelnen, sich gegenseitig authentisierenden Komponenten in einem drahtgebundenen Netz verschiedene Kontrolleinheiten von Computern sind, welche sich gegenüber einem Zentralcomputer authentifizieren und umgekehrt.

14. Verfahren nach einem der Ansprüche 1 - 13, **dadurch gekennzeichnet, daß** das AUC die vom Netz geforderten Dreier-Datensätze berechnet und diese auf Anforderung vom Netz OffLine und zeitlich unabhängig, jedoch auf jeden Fall vor dem Datenaustausch zwischen Netz und Endgerät an das Netz übermittelt.

## Claims

1. Method for the mutual authentication of components in a network by the challenge-response method, in which, for authentication of a terminal (M), in particular a mobile station, to the network, the network (N) requests at least one data pair consisting of a first random number (challenge 1) and a first response (response 1) from an authentication centre (AUC) on the basis of a request and passes on the first random number (challenge 1) to the terminal (M) which, on the basis of an internally stored code (Ki), likewise calculates the first response (response 1) therefrom and sends it to the network (N), authentication of the network (N) to the terminal (M) further taking place by the terminal sending the network a second random number (challenge 2) which is answered by the network with a second response (response 2) calculated in the AUC, **characterised in that** the first response (response 1) which is sent to the network (N) by the terminal (M) is simultaneously used as the second random number (challenge 2), the second response (response 2) already having been requested by the network from the AUC beforehand together with the first random number and the first response within the framework of a triple data record (challenge 1/response 1/response 2).

2. Method according to claim 1, **characterised in that** the network interprets the first response (response 1) which is sent back by the terminal (M) as the second random number (challenge 2).

3. Method according to claim 1 or 2, **characterised in that** transmission of the first random number (challenge 1) and first response (response 2) from the network (N) to the terminal (M) is effected one after the other in time.

4. Method according to claim 1 or 2, **characterised in that** transmission of the data pair (challenge 1/response 2) from the network (N) to the terminal (M) is effected simultaneously in the form of a single data record.

5. Method according to one of claims 2, 3 or 4, **characterised in that** the network requests data records from the authentication centre (AUC) in the form of triple data records (challenge 1/response 1/response 2).

6. Method according to claim 5, **characterised in that** several triple data records are supplied by the AUC as a reserve to reduce the frequency of requests.

7. Method according to claim 4 or 5, **characterised in that**, for use of the first response (response 1) of the terminal (M) as the second random number (challenge 2) for the purpose of authentication of the network to the terminal (M), the shorter length of the first response (response 1) is padded to the longer length of the second random number (challenge 2).

8. Method according to claim 7, **characterised in that** padding is effected individually to the subscriber and **in that** the full length of the first response (response 1) is shortened before transmission to the remote terminal.

9. Method according to claim 8, **characterised in that** the first response (response 1) is padded with defined bits consisting of the secret code (Ki) to the length of the second random number (challenge 2).

10. Method according to claim 8, **characterised in that** the second random number (challenge) corresponds to the original first response (response 1) before shortening thereof.

11. Method according to one of claims 1-10, **characterised in that** the network is a GSM network.

12. Method according to one of claims 1-10, **characterised in that** the network is a wired network.

13. Method according to claim 12, **characterised in that** the individual components which authenticate each other in a wired network are different control units of computers which authenticate themselves to a central computer and vice versa.

14. Method according to one of claims 1-13, **characterised in that** the AUC calculates the triple data records requested by the network and, on request from the network, transmits them to the network offline and independently in time, but in any case before data exchange between network and terminal.

## Revendications

1. Procédé d'authentification réciproque d'éléments dans un réseau selon le procédé de stimulation-réponse, selon lequel pour authentifier un terminal (M), en particulier une station mobile, par rapport au réseau, le réseau (N) demande à un centre d'authentification (AUC), sur la base d'une demande, au moins une paire de données composée d'un premier nombre aléatoire (stimulation 1) et d'une première réponse (réponse 1), et retransmet le premier nombre aléatoire (stimulation 1) au terminal (M) qui, à partir de là, calcule sur la base d'une clé (Ki) mise en mémoire au niveau interne la première réponse (réponse 1) et l'envoie au réseau (N), étant précisé qu'une authentification du réseau (N) par rapport au terminal (M) a également lieu grâce au fait que le terminal envoie au réseau un second nombre aléatoire (stimulation 2) auquel le réseau répond avec une seconde réponse (réponse 2) calculée dans le centre AUC,
**caractérisé en ce que** la première réponse (réponse 1) envoyée par le terminal (M) au réseau (N) est utilisée en même temps comme second nombre aléatoire (stimulation 2), le réseau ayant déjà demandé préalablement au centre AUC la seconde réponse (réponse 2), avec le premier nombre aléatoire et la première réponse, dans le cadre d'un ensemble de trois données (stimulation 1/réponse 1/réponse 2).

2. Procédé selon la revendication 1, **caractérisé en ce que** le réseau interprète comme second nombre aléatoire (stimulation 2) la première réponse (réponse 1) renvoyée par le terminal (M).

3. Procédé selon la revendication 1 ou 2, **caractérisé en ce que** la transmission du premier nombre aléatoire (stimulation 1) et de la première réponse (réponse 2) par le réseau (N) au terminal (M) se fait successivement dans le temps.

4. Procédé selon la revendication 1 ou 2, **caractérisé en ce que** la transmission de la paire de données (stimulation 1/réponse 2) par le réseau (N) au terminal (M) se fait en même temps, sous la forme d'un seul ensemble de données.

5. Procédé selon l'une des revendications 2, 3 ou 4, **caractérisé en ce que** le réseau demande des ensembles de donnés au centre d'authentification (AUC) sous forme d'ensembles de trois données (stimulation 1/réponse 1/réponse 2).

6. Procédé selon la revendication 5, **caractérisé en ce que** pour réduire la fréquence de demande, plusieurs ensembles de trois données sont fournis par le centre AUC, comme réserve.

7. Procédé selon la revendication 4 ou 5, **caractérisé en ce que** pour utiliser la première réponse (réponse 1) du terminal (M) comme second nombre aléatoire (stimulation 2) en vue d'une authentification du réseau par rapport au terminal (M), la longueur plus courte de la première réponse (réponse 1) est remplie pour atteindre la durée plus longue du second nombre aléatoire (stimulation 2).

8. Procédé selon la revendication 7, **caractérisé en ce que** le remplissage se fait individuellement pour chaque abonné et **en ce que** la longueur totale de la première réponse (réponse 1) est réduite avant la transmission au poste correspondant.

9. Procédé selon la revendication 8, **caractérisé en ce que** la première réponse (réponse (1) est remplie pour atteindre la longueur du second nombre aléatoire (stimulation 2) à l'aide de bits définis provenant de la clé secrète (Ki).

10. Procédé selon la revendication 8, **caractérisé en ce que** le second nombre aléatoire (stimulation) correspond à la première réponse originale (réponse 1) avant sa réduction.

11. Procédé selon l'une des revendications 1 à 10, **caractérisé en ce que** le réseau est un réseau GSM.

12. Procédé selon l'une des revendications 1 à 10, **caractérisé en ce que** le réseau est un réseau filaire.

13. Procédé selon la revendication 12, **caractérisé en ce que** les différents éléments qui s'authentifient mutuellement, dans un réseau filaire, sont constitués par différentes unités de contrôle d'ordinateurs qui s'authentifient par rapport à un ordinateur central et inversement.

14. Procédé selon l'une des revendications 1 à 13, **caractérisé en ce que** le centre AUC calcule les ensembles de trois données demandés par le réseau et les transmet au réseau à la demande du réseau, hors ligne et indépendamment dans le temps, mais dans tous les cas avant l'échange de données entre le réseau et le terminal.
